# EUROPEAN PATENT APPLICATION

(11) **EP 2 899 443 A1**
(43) Date of publication of application: **29.07.2015**
(21) Application number: 14152085.8
(22) Date of filing: 22.01.2014
(51) Int. Cl.: F16L 27/093, F16L 41/00

(54) **Pipeline fastener**

(71) Applicant: Hsu, Hung-I, Kaohsiung City 822 (TW)
(72) Inventor: Hsu, Hung-I, Kaohsiung City 822 (TW)
(74) Representative: Chaillot, Geneviève

(57) **Abstract**

A pipeline fastener (4) defines at least one hole (423) formed on a hollow shank (42) with a channel (422) formed therein and has a chip-removing section (424) at least formed between the hole (423) and the channel (422) of the shank (41). A diameter (d2) of the chip-removing section (424) is bigger than a bore diameter (d1) of the hole (423). Accordingly, by the chip-removing section (424) with the bigger diameter (d2), burrs (2) which are originally formed at a convergence between a bore surface (4231) of the hole (423) and a periphery of the shank (42) can be removed. Consequently, following burr-cleaning procedures are reduced to lower the production cost, and damages of the burrs (2) to other objects at the time of using the pipeline fastener (4) are further prevented, thereby improving the safety of the use efficiently.

## Description

### BACKGROUND OF THE INVENTION

### 1. Field of the Invention

The present invention pertains to a fastener, in particular to a pipeline fastener.

### 2. Description of the Related Art

An ordinary pipeline fastener is usually applied to fasten and connect two pipes. By means of the pipeline fastener, the two pipes can be communicated with each other, whereby the pipeline fastener is usually used in a hydraulic brake system of vehicles, such as a joint for connecting a brake fluid container with a brake fluid pipe. Consequently, the pipeline fastener is widely applied to varied fields.

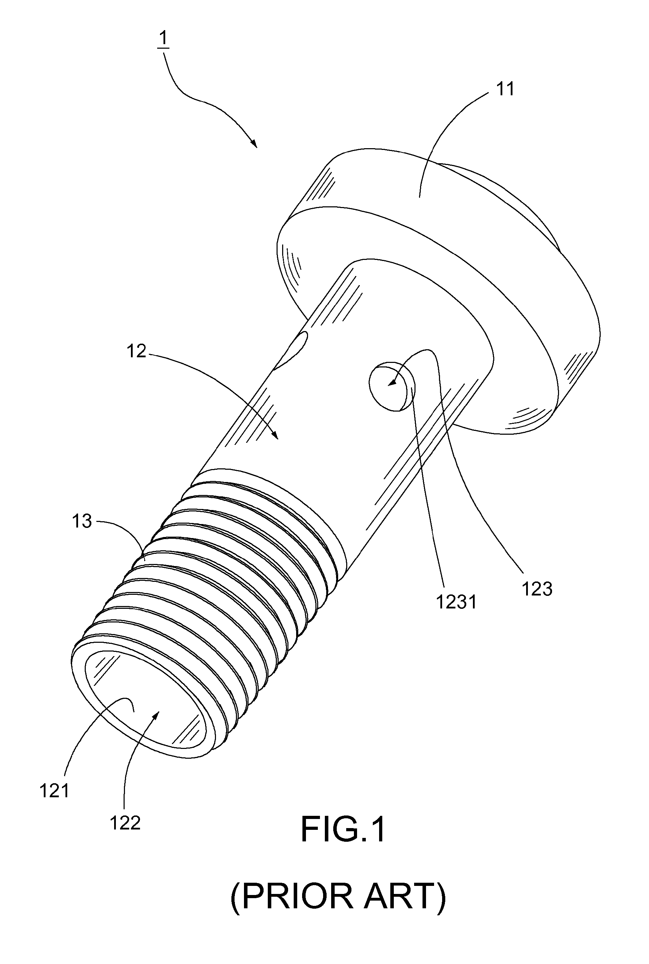

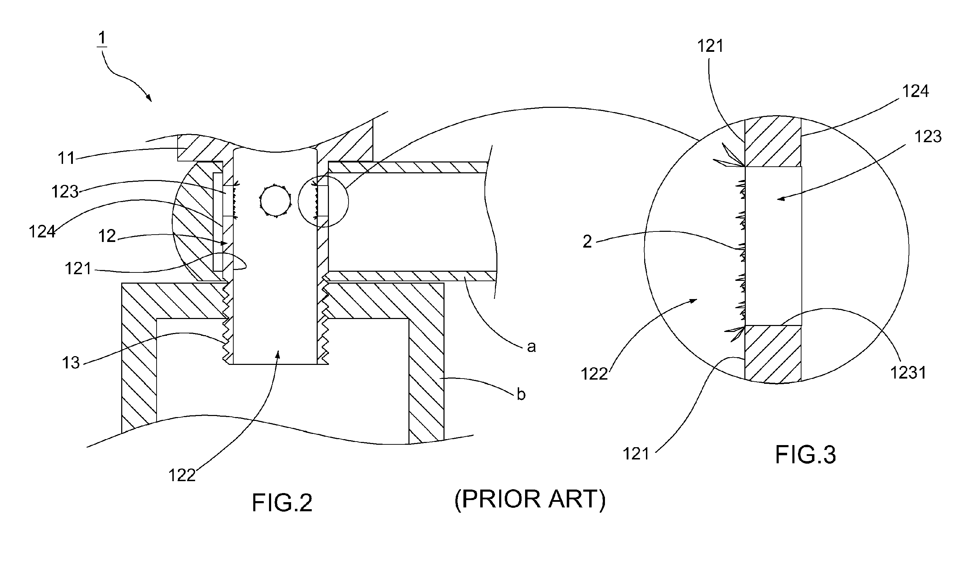

Referring to Fig.**1** and Fig.**2**, a conventional pipeline fastener **1** comprises a head **11,** a shank **12** connected to the head **11,** and a plurality of threads **13** spirally disposed on the shank **12.** Wherein, a channel **122** is enclosed by an inner wall **121** defined inside the shank **12.** One end of the channel **122** opposite to the head **11** is communicated with an outside. At least one hole **123** penetrating from an outer wall **124** of the shank **12** to the inner wall **121** thereof is formed on the shank **12** for facilitating the hole **123** to be communicated with the channel **122.** The product is operated by fitting the shank **12** into a pipe **a,** connecting the channel **122** to an interior of the pipe **a** via the hole **123,** and then fastening the threads **13** into another pipe **b** for allowing the channel **122** to be communicated with the pipe **b.** Whereby, the pipes **a,b** are jointed together through the pipeline fastener **1** for providing a fluid (not shown) to be sequentially conveyed from the pipe **a**, the hole **123,** and the channel **122** to another pipe **b.**

Consulting Fig.**3**, a production of the pipeline fastener **1** necessitates a punching procedure, that is to say, a hole is punched from the outer wall **124** of the shank **12** to the inner wall **121** thereof. During the punching procedure, burrs **2** are formed on a periphery of the hole **123,** in other words, the burrs **2** which are not cleaned up are easily left on sections where the inner wall **121** and the outer wall **124** meet a surface **1231** of the hole **123** respectively. Generally, the burrs **2** are metal chips with high hardness and sharpness. If the burrs **2** fall and flow with the fluid in time of use, the pipes **a,b** or pumps are most probably damaged. To avoid the aforesaid drawback, a burr-cleaning procedure is necessary to be executed after the punching procedure of the pipeline fastener **1** is finished. The burrs **2** on the outer wall **124** can be removed with ease; however, processing works to remove the burrs **2** on the inner wall **121** are very complicated. In general, a cutting tool (not shown) is adopted to remove the burrs, which is operated by introducing the tool from the channel **122** into an inside of the shank **12** for cutting the burrs **2** at a convergence of the inner wall **121** and the surface **1231.** Nevertheless, the above operation cannot remove the burrs **2** completely because the burrs **2** are not absolutely cut off and some of them still suspend on the inner wall **121** or are bent into the hole **123** while the cutting tool is inserted to contact to the burrs **2.** Consequently, the conventional operation has a poor burr-removal effect. Moreover, some manufacturers adopt a method of using a high temperature generated while explosive substances explode and burn to melt the burrs **2** away for making sure the quality of the pipeline fastener **1.** This aforesaid method has a preferable effect of removing the burrs but needs more processing procedures and requires much time and more production cost, which needs to be improved.

### SUMMARY OF THE INVENTION

The purpose of the present invention is to provide a pipeline fastener which certainly prevents the burrs from being generated, thereby lowering the production cost and enhancing the safety of the use.

The pipeline fastener in accordance with the present invention comprises a screw head, a shank, and a plurality of threaded units. A channel is enclosed by an inner wall defined inside the shank, and one end of the shank opposite to the screw head is communicated with an outside. At least one hole enclosed by a bore surface is formed on the shank, the bore surface is jointed to a chip-removing surface, and a chip-removing section is enclosed by the chip-removing surface. Whereby, the chip-removing section is defined between the channel and the hole, a diameter of the chip-removing section being bigger than a bore diameter of the hole. Accordingly, by the chip-removing section with the bigger diameter, burrs which are originally apt to be formed at a conventional convergence between the inner wall and a periphery of the hole can be removed effectively. Therefore, following burr-cleansing procedures are reduced to lower the production cost, and damages of the fallen burrs to other objects at the time of using the pipeline fastener are further prevented, thereby promoting the safety of the use efficiently.

Preferably, the chip-removing surface is further connected between the bore surface and the outer wall, whereby the chip-removing section enclosed by the chip-removing surface is also formed between the hole and the outside, the diameter of the chip-removing section which is set between the hole and the outside being also bigger than the bore diameter of the hole.

Preferably, the chip-removing section is formed into an inward-recessed shape or a structure having a width mouth and a gradual narrow neck.

The advantages of the present invention over the known prior arts are more apparent to those of ordinary skilled in the art upon reading following descriptions in junction with the drawings.

### BRIEF DESCRIPTION OF THE DRAWINGS

Fig.1 is a perspective view showing a conventional pipeline fastener;
Fig.2 is a schematic view showing an embodiment of Fig.1 in use;
Fig.3 is a partial enlarged view of Fig.2;
Fig.4 is a perspective cross-sectional view showing a pipeline fastener of the present invention;
Fig.5 is a partial schematic view showing a first preferred embodiment of the present invention;
Fig.6 is a partial schematic view showing a second preferred embodiment of the present invention;
Fig.7 is a schematic view showing the first preferred embodiment of the present invention in use;
Fig.8 is a schematic view showing a third preferred embodiment of the present invention.

### DETAILED DESCRIPTION OF THE PREFERRED EMBODIMENTS

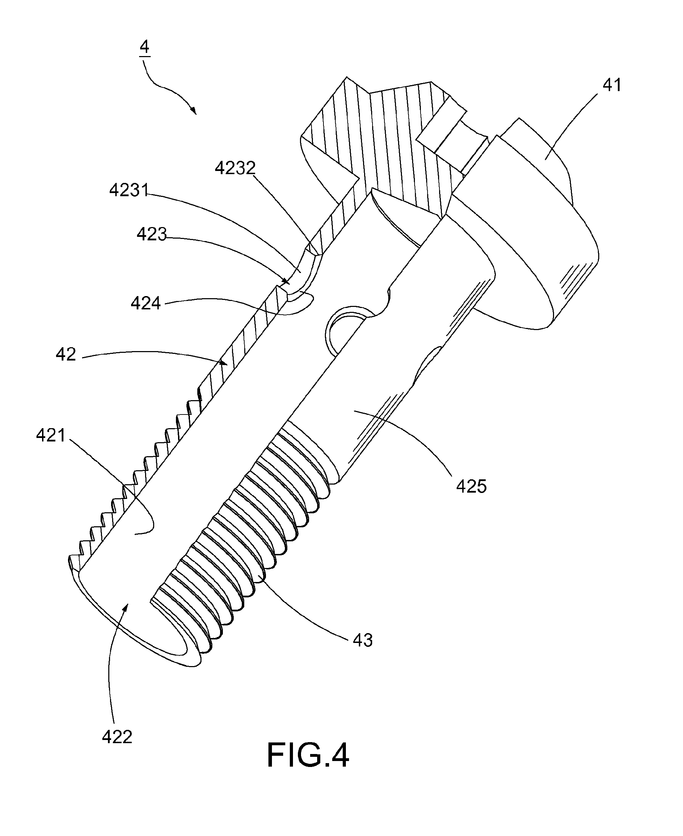

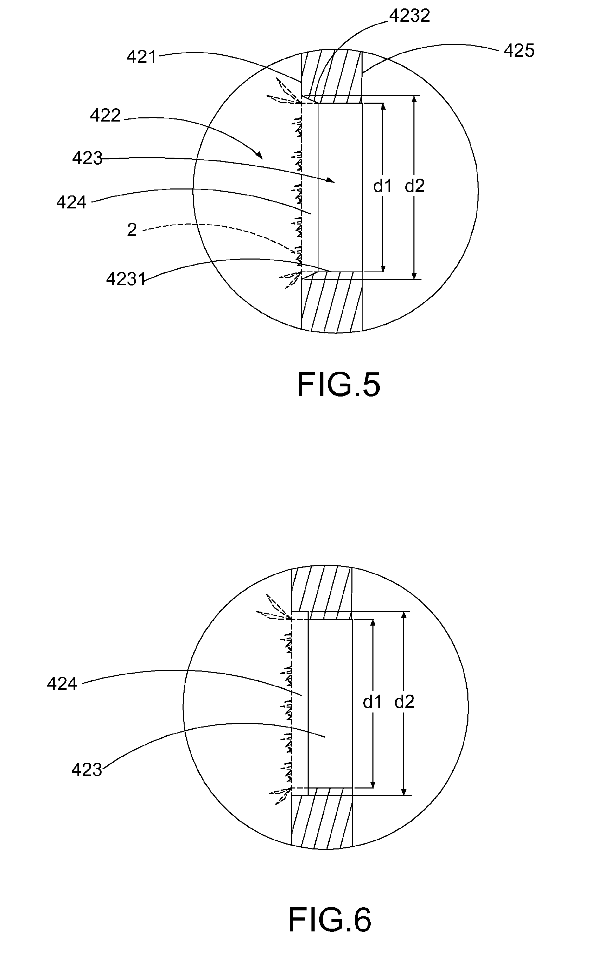

Accompanying with Fig.**4** and Fig.**5**, a first preferred embodiment of the pipeline fastener **4** is shown. The pipeline fastener **4** comprises a screw head **41,** a hollow shank **42** outwardly extended from the screw head **41,** and a plurality of threaded units **43** spirally disposed on the shank **42.** Wherein, the shank **42** contains an outer wall **425** in contact with an outside, a channel **422** being enclosed by an inner wall **421** defined inside the shank **42.** One end of the channel **422** opposite to the screw head **41** is communicated with the outside. As a result, that end inside the shank **42** is formed into an open state, and the other end thereof is blocked by the screw head **41.** At least one hole **423** enclosed by a bore surface **4231** is formed on the shank **42,** the bore surface **4231** is connected to a chip-removing surface **4232** which is jointed to the inner wall **421,** and a chip-removing section **424** is enclosed by the chip-removing surface **4232.** Whereby, the chip-removing section **424** is formed between the channel **422** and the hole **423,** a diameter **d2** of the chip-removing section **424** being bigger than a bore diameter **d1** of the hole **423.** The chip-removing section **424** is formed without limitations. In this embodiment, the chip-removing section **424** can be a structure having a width mouth and a gradual narrow neck as shown in Fig.**5**. Alternatively, as Fig.**6** shown, the chip-removing section **424** can also be formed into an inward-recessed shape. Herein, Fig.**5** is taken as an example in the preferred embodiments of the present invention.

Referring to Fig.**4** and Fig.**5**, after a formation of basic parts of the pipeline fastener **4** including the screw head **41,** the shank **42,** and the threaded units **43,** the channel **422** and the hole **423** are formed in sequence. A tool (not shown) is applied to fit into the hole **423** and cutting at a convergence between the bore surface **4231** and the inner wall **421** for forming the chip-removing surface **4232.** The chip-removing section **424** is enclosed by the chip-removing surface **4232,** the diameter **d2** of the chip-removing section **424** is bigger than the bore diameter **d1** of the hole **423.** Therefore, during a formation procedure of the chip-removing section **424,** burrs **2** which should be originally generated on a periphery of the hole **423** are removed, namely the conventional burrs **2** as shown in dotted lines of Fig.**5** can be directly removed in the present invention. As a consequence, the burrs **2** are not left on the inner wall **421,** and following procedures to clean the burrs **2** are also saved, thereby reducing the production cost of the pipeline fastener **4.**

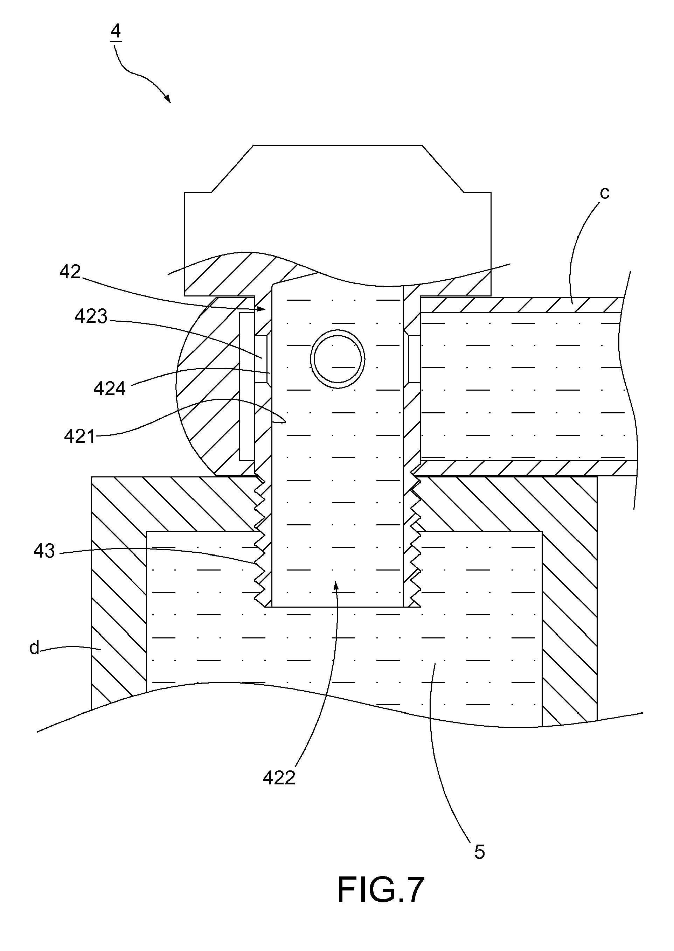

Consulting Fig.**7**, while the pipeline fastener **4** is applied to connect pipes **c,d,** at first, the shank **42** is introduced into the pipe **c** for facilitating the channel **422** to be jointed to an interior of the pipe **c** via the hole **423,** and then the threaded units **43** are fastened into another pipe **d** for allowing the channel **422** to be communicated with an interior of the pipe **d.** Therefore, the pipe **c** and the pipe **d** are intercommunicated through the pipeline fastener **4** for providing a fluid **5** to be conveyed from the pipe **c,** the hole **423,** the channel **422,** and thence into another pipe **d** in sequence. Simultaneously, the chip-removing section **424** prevents the burrs **2** (not shown) from being left on the inner wall **421.** From the above design, the present invention can prevent the problem that burrs **2** not severed in the conventional art fall off by a flowing force of the fluid **5** and flow in the fluid **5,** whereby damages of the fallen burrs to the pipes **c,d** and pumps are avoided and the safety of the use is enhanced.

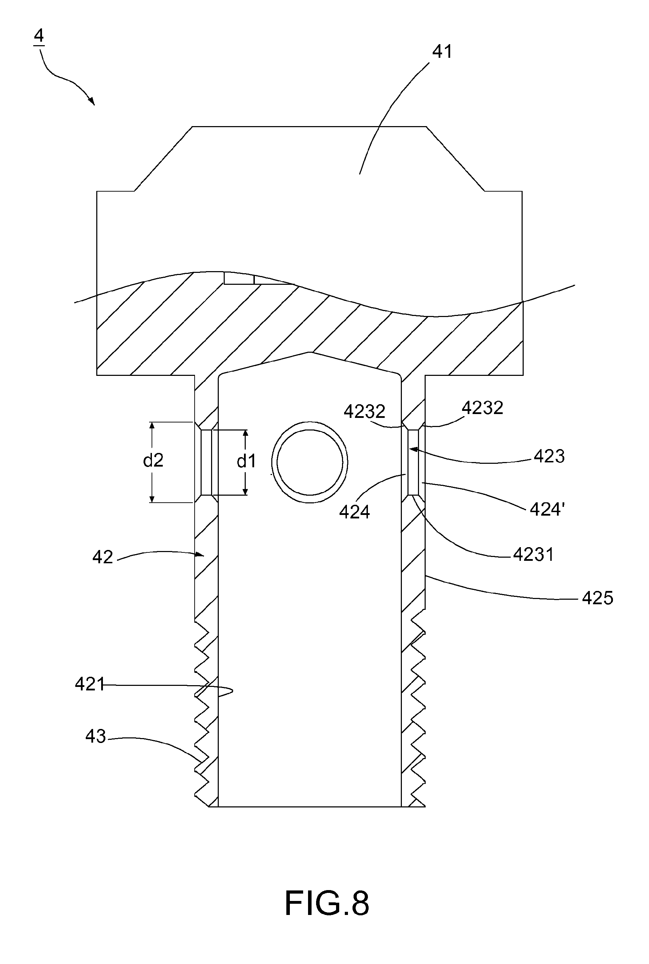

Referring to Fig.**8**, a third preferred embodiment of the present invention is shown. The pipeline fastener **4** still comprises a screw head **41,** a shank **42,** and a plurality of threaded units **43,** the detailed components and structure thereof are the same as the first preferred embodiment, which herein are omitted. Particularly, in this embodiment, the chip-removing surface **4232** is further connected between the bore surface **4231** and the outer wall **425,** whereby a chip-removing section **424'** enclosed by the chip-removing surface **4232** can be also defined between the hole **423** and the outside, a diameter **d2'** of the chip-removing section **424'** being bigger than the bore diameter **d1** of the hole **423.** As a result, the present invention prevents the burrs from being generated on the inner wall **421** of the shank **42.** At the same time, the burrs (not shown) which should be originally left on the outer wall **425** and on the periphery of the hole **423** are directly removed via the formation of the chip-removing section **424'** connected to the outer wall **425,** whereby the production cost of the pipeline fastener **4** is reduced.

To sum up, the present invention of the pipeline fastener mainly uses a chip-removing section formed between the inner wall of the shank and each hole, or two chip-removing sections formed between the inner wall and the outer wall of the shank and each hole respectively. Moreover, the diameter of the chip-removing section is bigger than the bore diameter of the hole. Whereby, the burrs on the periphery of the hole can be absolutely removed. The following burr-cleaning procedures are saved to lower the production cost. Further, the damages of the fallen burrs flowing with the fluid to other objects in time of use are also avoided, thereby enhancing the safety of the use and achieving the purpose of the present invention.

While we have shown and described the embodiment in accordance with the present invention, it should be clear to those skilled in the art that further embodiments may be made without departing from the scope of the present invention.

## Claims

1. A pipeline fastener (4) comprising a screw head (41), a hollow shank (42) outwardly extended from said screw head (41), and a plurality of threaded units (43) spirally disposed on said shank (42), wherein said shank (42) includes an outer wall (425) in contact with an outside, a channel (422) being enclosed by an inner wall (421) defined inside said shank (42), one end of said channel (422) opposite to said screw head (41) being communicated with said outside, at least one hole (423) enclosed by a bore surface (4231) being formed on said shank (42);
**characterized in that** said bore surface (4231) of said hole (423) is connected to a chip-removing surface (4232) which is jointed to said inner wall (421), a chip-removing section (424) being enclosed by said chip-removing surface (4232), whereby said chip-removing section (424) is defined between said channel (422) and said hole (423), a diameter (d2) of said chip-removing section (424) being bigger than a bore diameter (d1) of said hole (423).

2. The pipeline fastener (4) as claimed in claim 1, wherein said chip-removing surface (4232) is further connected between said bore surface (4231) and said outer wall (425), whereby said chip-removing section (424) enclosed by said chip-removing surface (4232) is also formed between said hole (423) and said outside, said diameter (d2) of said chip-removing section (424) which is set between said hole (423) and said outside being also bigger than said bore diameter (d1) of said hole (423).

3. The pipeline fastener (4) as claimed in one of claims 1 and 2, wherein said chip-removing section (424) is formed into an inward-recessed shape.

4. The pipeline fastener (4) as claimed in one of claims 1 and 2, wherein said chip-removing section (424) is formed into a structure having a width mouth and a gradual narrow neck.
